**Europäisches Patentamt**

**European Patent Office**

**Office européen des brevets**

(19)

(11) **EP 1 247 352 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(21) Anmeldenummer: **01911349.7**

(22) Anmeldetag: **12.01.2001**

(51) Int Cl.⁷: **H04B 7/005**

(86) Internationale Anmeldenummer:
**PCT/DE2001/000109**

(87) Internationale Veröffentlichungsnummer:
**WO 2001/052440 (19.07.2001 Gazette 2001/29)**

(54) **LEISTUNGSSTEUERUNG IN MOBILFUNKSYSTEMEN BEI UNTERBROCHENER ÜBERTRAGUNG**

POWER CONTROL IN MOBILE RADIO TELEPHONE SYSTEMS WHEN TRANSMISSION IS INTERRUPTED

COMMANDE DE PUISSANCE DANS DES SYSTEMES TELEPHONIQUES MOBILES EN CAS D'INTERRUPTION DE TRANSMISSION

(84) Benannte Vertragsstaaten:
**DE ES FR GB IT TR**

(30) Priorität: **14.01.2000 DE 10001367**

(43) Veröffentlichungstag der Anmeldung:
**09.10.2002 Patentblatt 2002/41**

(73) Patentinhaber: **SIEMENS AKTIENGESELLSCHAFT**
**80333 München (DE)**

(72) Erfinder: **OESTREICH, Stefan**
**83607 Holzkirchen (DE)**

(56) Entgegenhaltungen:
**EP-A- 0 940 933**    **EP-A- 0 949 830**
**WO-A-98/23044**    **WO-A-98/45962**
**US-A- 5 528 593**    **US-A- 5 742 595**
**US-A- 5 790 940**

**Beschreibung**

Die Erfindung betrifft ein Verfahren zur Sende-leistungsregelung in einem Funk-Kommunikationssy-stem, insbesondere in einem Mobilfunksystem.

In Funk-Kommunikationssystemen, beispielsweise dem europäischen Mobilfunksystem der zweiten Generation GSM (Global System for Mobile Communications), werden Informationen wie beispielsweise Sprache, Bildinformation oder andere Daten mit Hilfe von elektromagnetischen Wellen über eine Funkschnittstelle übertragen. Die Funkschnittstelle bezieht sich auf eine Verbindung zwischen einer Basisstation und einer Vielzahl von Teilnehmerstationen, wobei die Teilneh-merstationen beispielsweise Mobilstationen oder orts-feste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration UMTS sind zwei Modi vorgesehen, wobei ein Modus einen FDD-Betrieb (Frequency Division Duplex) und der andere Modus einen TDD-Betrieb (Time Division Duplex) bezeichnet. Diese Modi finden ihre Anwendung in unterschiedlichen Frequenzbändern, wobei beide Modi ein sogenanntes CDMA-Teilnehmerseparierungsverfahren (Code Division Multiple Access) unterstützen.

In Mobilfunksystemen, die eine auf einem CD-MA-Verfahren basierende Teilnehmerseparierung nut-zen, ist eine schnelle Leistungsregelung notwendig, um einen gesicherten Empfang aller bestehenden Kommunikationsverbindungen am Ort der Basisstation bei einer gleichzeitigen geringen Interferenzstörung von Nachbarübertragungskanälen sicherzustellen. Die schnelle Sendeleistungsregelung ist insbesondere für Echtzeit-Dienste wie Sprachübertragung bei niedrigen Geschwindigkeiten erforderlich. Für den FDD-Modus wird nach dem Stand der Technik, wie er beispielsweise in dem Dokument ARIB "Japan's Proposal for Candidate Radio Transmission Technology on IMT-2000:W-CDMA", June 1998, Japan, S. 39 bis 42, offenbart ist, eine schnelle Serideleistungsregelung basierend auf einer geschlossenen und einer offenen Regelschleife realisiert. Der Einsatz der offenen oder geschlossenen Regelschleife hängt dabei von einem Typ des jeweiligen Übertragungskanals ab. Die schnelle geschlossene Regelschleife basiert auf sogenannten TPC-Bits (Transmitter Power Control), die periodisch von der jeweils kontrollierenden Einrichtung des Funk-Kommunikationssystems zu der anderen Einrichtung signalisiert werden. Eine Basisstation steuert somit die Sendeleistung der Teilnehmerstation und umgekehrt.

Ein derartiges Prinzip der Sendeleistung soll zum Zwecke einer Harmonisierung zwischen den beiden Modi des UMTS-Mobilfunksystems prinzipiell auch für den TDD-Modus eingesetzt werden.

Um im TDD Modus die Interferenz niedrig zu halten und Fadingeffekte bei der Empfangsleistung auszuregeln, wird in Aufwärtsrichtung UL eine offene und in Abwärtsrichtung DL eine geschlossene Leistungsregelung eingesetzt, die allgemein als Power Control bezeichnet werden. Dabei gibt es in Abwärtsrichtung die innere und äußere Regelschleife. Die äußere Schleife mißt die Qualität des Eingangssignals (z. B. Rahmenfehlerrate) und gibt daraufhin einen Sollwert (SIR-target) für das Signal/Störverhältnis (SIR) vor, mit dem die geforderte Qualität bereitgestellt werden kann. Die innere Schleife mißt das tatsächliche Signal/Störverhältnis des empfangenen Signals und vergleicht es mit dem Sollwert für das Signal/Störverhältnis. Je nach Ergebnis wird ein Leistungsregelungs-Kommando zur Gegenseite übertragen, die Sendeleistung entsprechend zu verändern. Die innere Schleife arbeitet also rahmenbezogen und sehr schnell, während die äußere Schleife den Sollwert nur träge ändert. Diese Art von Leistungsregelung setzt aber voraus, daß permanent sowohl gesendet, als auch empfangen wird. Nachfolgend wird insbesondere die Leistungsregelung in der geschlossenen Schleife betrachtet.

In vielen Fällen, wenn z. B. keine Daten zu senden sind, wie z. B. bei einer diskontinuierlichen Übertragung (DTX) von Funkrahmen, ist jedoch die übertragung zwischen einer Endeinrichtung, z.B. einer mobilen Funkstation, und einer Basisstation zumindest in einer Richtung unterbrochen. Es kann dann entweder kein Leistungsregelungs-Kommando übertragen werden, und/oder es steht kein Signal für Empfangsmessungen zur Verfügung. Letzteres ist zu dem Zeitpunkt von Bedeutung, zu dem die Übertragung wieder aufgenommen werden soll, wobei die Sendeleistung dann jedoch aufgrund einer längeren Unterbrechung unbestimmt ist. Außerdem ist in diesem Fall ohne Eingangssignal sowohl die innere als auch die äußere Leistungsregelungs-Regelschleife unterbrochen. Das geschilderte Problem tritt haupsächlich bei TDD-Systemen auf, z.B. bei UTRA-TDD, wenn dort die Übertragung im Falle von diskontinuierlicher Übertragung zeitweilig unterbrochen und damit auch die Leistungsregelungs-Regelschleife unterbrochen wird. Bei CDMA-Systemen mit einer FDD-Betriebsart ist dies in der Regel nicht kritisch, da bei einer Unterbrechung der Daten zumindest Kontrollinformationen weiter übertragen werden.

Bei derzeitigen Systemen wird die Sendeleistung nach einer Unterbrechung mit einem Sicherheitszuschlag angesetzt, d.h. es wird mit erhöhter Intensität gesendet. Dadurch wird jedoch unnötige Interferenz erzeugt.

Aus der WO 98/45962 A1 ist ein Verfahren zur Sendeleistungssteuerung bekannt, bei dem eine in einem DTX-Modus befindliche Basisstation während eines Intervalls, welches der Periodizität des SACCH entspricht, RSSI-Messungen von von einer Mobilstation gesendeten Signalen durchführt. Diese Messungen verwendet die Basisstation zur Berechnung einer theoretischen Sendeleistungssteuerungskonstante. Die Mobilstation wiederum empfängt während des DTX-Modus Signale der Basisstation und verwendet diese zur Bestimmung eines Korrekturwertes, der zu einer letzten von der Basisstation empfangenen Sendeleistungskorrekturkonstante addiert wird. Die derart korrigierte Sendeleistungskorrekturkonstante wird von der Mobilstation zur Berechnung eines Sendeleistungsniveaus verwendet.

Aus der EP 0 949 830 A2 ist ein Verfahren bekannt, bei dem während einer Übertragungpause in Abwärtsrichtung von einer Basisstation zu einer Mobilstation Pilotsignale gesendet werden, mittels derer die Mobilstation eine Verbindungsqualität bestimmt und das Ergebnis zu der Basisstation signalisiert. Abhängig von dieser Signalisierung stellt die Basisstation die Sendeleistung für die Abwärtsrichtung ein.

Der Erfindung liegt die Aufgabe zugrunde, ein Verfahren anzugeben, das in einem Funk-Kommunikationssystem eine verbesserte Sendeleistungsregelung bei unterbrochener Datenübertragung ermöglicht.

Diese Aufgabe wird durch das Verfahren mit den Merkmalen des Anspruchs 1 und durch das Kommunikationssystem mit den Merk-malen des Anspruchs 11 gelöst. Vorteilhafte Weiterbildungen sind Gegenstand von Unteransprüchen.

Vorteilhafterweise wird ein "fremdes" Signal verwendet, um im Falle eines fehlenden Datensignales die innere und die äußere Leistungsregelungs-Schleife weiterzuführen. Es werden dabei vorzugsweise unverändert Leistungsregelungs-Kommandos an den Sender übertragen. Dieser weiß durch das Fehlen zu sendender Daten bzw. Datensignale, daß er diese Kommandos erst aufakkumulieren und die Sendeleistung dann später um den aufakkumulierten Wert korrigieren muß.

Prinzipiell ist das Aufsummieren der Kommandos im Sender und im Empfänger möglich. Beim Aufsummieren im Sender kann die Summe in zeitlich regelmäßigen oder unregelmäßigen Abständen an den Empfänger übertragen werden. Dadurch ist der Betrieb des Verfahrens insbesondere auch dann möglich, wenn auch die regelmäßige Übertragung der Leistungsregelungs-Kommandos nicht möglich ist.

Bei fehlendem Dateneingang auch der Leistungsregelungs-Kommandos werden die bereits übertragenen Werte im Empfänger vorteilhafterweise konstant gehalten.

Alternativ oder ergänzend dazu bietet sich auch eine automatische Summenbildung im Empfänger bzw. im Sender der Leistungsregelungs-Kommandos an, wobei die Summe bei Übertragungpausen in Aufwärtsrichtung zeitlich versetzt übermittelt wird.

Vorteilhafterweise wird eine Korrektur der Summe mit einem "Unsicherheitsfaktor" vorgenommen, der sich z. B. aus der Zahl der nicht dekodierbaren Leistungsregelungs-Kommandos ergibt.

Nachfolgend werden Ausführungsbeispiele anhand der Zeichnung näher erläutert. Es zeigen:

Fig. 1    ein Blockschaltbild eines Funk-Kommunikationssystems, insbesondere eines Mobilfunksystems,

Fig. 2    eine schematische Darstellung der Struktur einer TDD-Funkschnittstelle, und

Fig. 3    ein Blockschaltbild einer beispielhaften Realisierung der inneren und äußeren Regelschleife in einer Sende/Empfangseinrichtung einer Basisstation bzw. Teilnehmerstation.

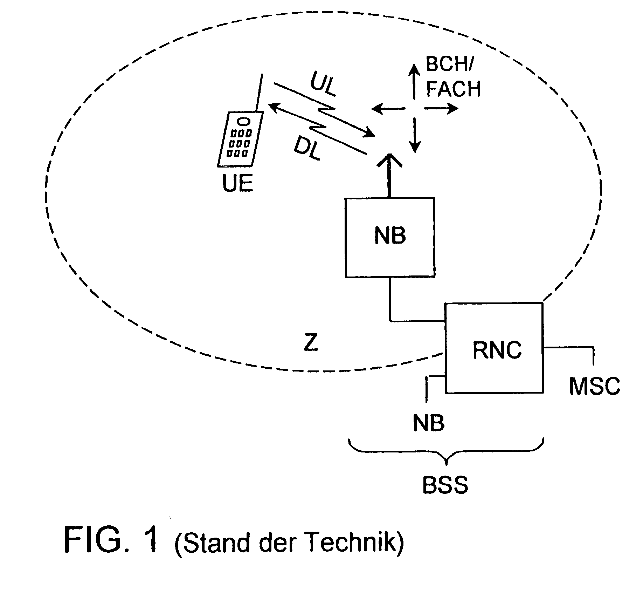

Fig. 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren Basisstationssystemen BSS (BSS - Base Station Subsystem), die mit diesen Mobilvermittlungsstellen MSC verbunden sind. Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (NB - Node B) auf. Eine Basisstation NB kann über eine Funkschnittstelle Verbindungen zu Kommunikations-Endgeräten bzw. Teilnehmerstationen UE (UE - User Equipment), wie z.B. Mobilstationen oder anderweitigen mobilen und stationären Endgeräten, aufbauen. Durch jede Basisstation NB wird zumindest eine Funkzelle Z gebildet. Die Größe der Funkzelle Z wird in der Regel durch die Reichweite eines allgemeinen Signalisierungskanals (BCH - Broadcast Control Channel), der von den Basisstationen NB1, NB2 mit einer jeweils festgelegten und konstanten Sendeleistung gesendet wird, bestimmt. Bei einer Sektorisierung oder bei hierarchischen Zellstrukturen können pro Basisstation NB auch mehrere Funkzellen Z versorgt werden. Die Funktionalität dieser Struktur ist auf andere Funk-Kommunikationssysteme übertragbar, in denen die nachfolgend beschriebene Entwicklung zum Einsatz kommen kann.

Das Beispiel der Fig. 1 zeigt eine Teilnehmerstation UE, die als eine Mobilstation ausgestaltet ist und die sich z.B. mit einer Geschwindigkeit V in der Funkzelle Z der Basisstation NB bewegt. Die Teilnehmerstation UE hat eine Verbindung zu der Basisstation NB aufgebaut, auf der in Aufwärtsrichtung UL und Abwärtsrichtung DL eine Signalübertragung eines gewählten Dienstes erfolgt. Während der Verbindung wertet die Teilnehmerstation UE periodisch Übertragungseigenschaften der Funkschnittstelle zu der sie versorgenden Basisstation NB sowie zu weiteren die Teilnehmerstation UE umgebenden Basisstationen NB aus, um bei einer Verschlechterung der Ubertragungsqualität eine Erhöhung der Sendeleistung von der Basisstation NB oder beispielsweise eine Verbindungsweiterschaltung zu einer benachbarten Basisstation NB anzufordern. Gleiches gilt bei einer Verbesserung der Ubertragungsqualität, bei der eine mögliche Erniedrigung der Sendeleistung signalisiert wird, um die Interferenz in der Funkzelle Z zu minimieren.

Die Steuerung der Sendeleistung der Basisstation NB führt die Teilnehmerstation UE mittels von Signalisierungsnachrichten (TPC-Kommandos) durch, in denen sie beispielsweise eine gemessene Variation der Übertragungseigenschaften in eine erforderliche Sendeleistungsänderung abbildet. Die Ubertragungseigenschaften werden durch einen Wert SIR und BER oder dessen über ein Zeitintervall gemittelten Mittelwert BERavg charakterisiert. Als Zeitintervall für die Mittelwertbildung kann beispielsweise die Periodizität des äußeren Regelkreises "Outer Loop" gewählt werden. Als charakteristischer Wert BER werden beispielsweise Qualitätsbewertungen wie eine Bitfehlerrate oder eine Rahmenfehlerrate eingesetzt. Für SIR werden bevorzugt funktechnische Meßgrößen wie eine Pfaddämpfung, eine Interferenzsituation am Ort der Teilnehmerstation UE sowie Kombinationen dieser Parameter eingesetzt. Die Variation der charakteristischen Werte BER und SIR kann ergänzend oder alternativ auch anhand des mit einer konstanten und der Teilnehmerstation bekannten Sendeleistung gesendeten allgemeinen Signalisierungskanals Broadcast-Kanal BCH ermittelt werden. Ein gleiches Verfahren zur Steuerung der Sendeleistung der Teilnehmerstation UE führt die Basisstation NB durch. Nach einer entsprechenden Auswertung der Ubertragungseigenschaften signalisiert sie der Teilnehmerstation UE eine Erhöhung oder Erniedrigung der Sendeleistung. Diese Signalisierung erfolgt gemäß dem einleitend genannten Stand der Technik für den FDD-Modus der ARIB beispielsweise durch ein spezifisches TPC-Bit (Transmitter Power Control).

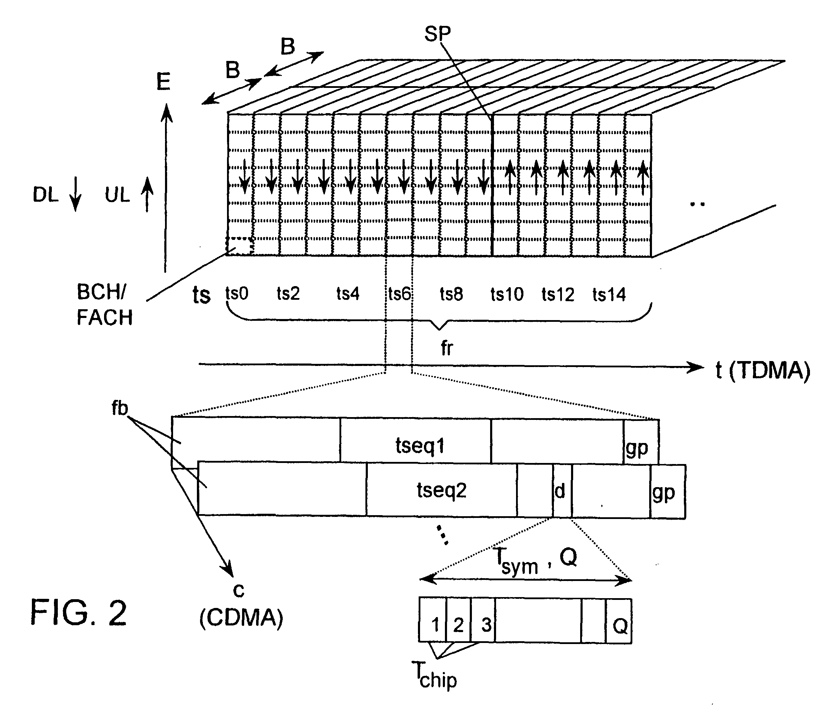

Die Rahmenstruktur der Funkübertragung im TDD-Modus des UMTS-Mobilfunksystems, in der das vorgeschlagene Verfahren vorteilhaft einsetzbar ist, ist aus der Fig. 2 ersichtlich. Gemäß einer TDMA-Komponente (Time Division Multiple Access) ist eine Aufteilung eines breitbandigen Frequenzbereiches in mehrere Zeitschlitze ts gleicher Zeitdauer, beispielsweise 16 Zeitschlitze ts0 bis ts15 vorgesehen, die einen Zeitrahmen fr bilden. Ein Frequenzband B erstreckt sich über einen bestimmten Frequenzbereich. Für die Signalübertragung wird ein Teil der Zeitschlitze in Abwärtsrichtung DL und ein Teil der Zeitschlitze in Aufwärtsrichtung UL genutzt. Beispielhaft ist ein Asymmetrieverhältnis von 3:2 zugunsten der Abwärtsrichtung DL gezeigt. Bei diesem TDD-Übertragungsverfahren entspricht das Frequenzband B für die Aufwärtsrichtung UL dem Frequenzband B für die Abwärtsrichtung DL. Gleiches wiederholt sich für weitere Trägerfrequenzen. Durch die variable Zuordnung der Zeitschlitze ts für Auf- oder Abwärtsrichtung UL, DL können vielfältige asymmetrische Ressourcenzuteilungen vorgenommen werden.

Innerhalb der Zeitschlitze ts werden Informationen mehrerer Verbindungen in Funkblöcken übertragen. Die Daten d sind verbindungsindividuell mit einer Feinstruktur, einem Spreizkode c, gespreizt, so daß empfangsseitig beispielsweise n Verbindungen durch diese CDMA-Komponente (Code Division Multiple Access) separierbar sind. Die Spreizung von einzelnen Symbolen der Daten d bewirkt, daß innerhalb der Symboldauer $T_{sym}$ Q Chips der Dauer $T_{chip}$ übertragen werden. Die Q Chips bilden dabei den verbindungsindividuellen Spreizkode c.

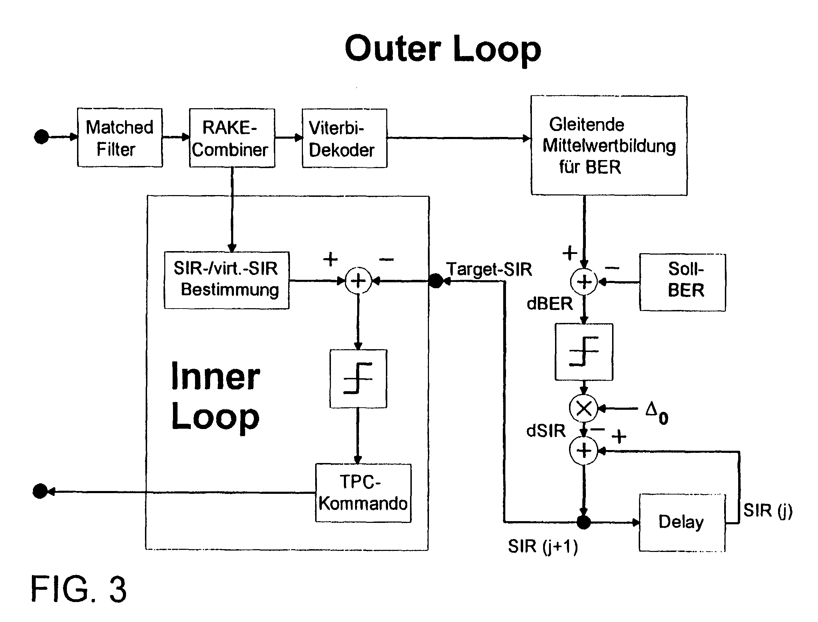

Wie nachfolgend auch zu der Fig. 3 erläutert, wird in einem Verfahren und einer Schaltung die äußere Regelschleife Outer Loop sowohl für die Sendeleistungsregelung der Basisstation NB als auch für die Sendeleistungsregelung der Teilnehmerstation UE genutzt..In der äußeren Regelschleife Outer Loop der Basisstation NB und der Teilnehmerstation UE wird ein Zielwert eines Signal-Interferenz-Verhältnisses Target ermittelt und jeweils signalisiert. Der Zielwert des Signal-Interferenz-Verhältnisses Target SIR stellt eine ausreichende übertragungsqualität sicher und muß entsprechend den aktuellen Übertragungsbedingungen angepaßt werden. Die jeweilige innere Regelschleife kann dabei eine besonders schnelle Sendeleistungsregelung ausführen. Diese schnelle Sendeleistungsregelung erfolgt über die TPC-Bit, die jeweils eine Erhöhung oder Erniedrigung der Sendeleistung um einen bestimmten Wert in dB bewirken.

In der Fig. 3 ist beispielhaft eine Realisierung der erfindungsgemäßen Kombination einer inneren Regelschleife Inner Loop und einer äußeren Regelschleife Outer Loop in einer Sende/Empfangseinrichtung der Basisstation NB oder auch der Teilnehmerstation UE angegeben. Die Struktur entspricht der Struktur der Fig. 3.5-5, Seite 40, des genannten Standes der Technik der ARIB. Die empfangenen Signale werden in einem sogenannten Matched Filter gefiltert und einer Detektoreinrichtung zugeführt. In dem dargestellten Beispiel ist die Detektoreinrichtung als ein bekannter RAKE-Combiner ausgestaltet.

Aus den detektierten Signalen wird in der inneren Regelschleife Inner Loop ein Signal-Interferenz-Verhältnis SIR ermittelt. Das Signal-Interferenz-Verhältnis SIR dient der schnellen Sendeleistungsregelung als Basis für eine optimale Sendeleistungseinstellung, da die Interferenzsituation am Empfänger das wichtigste Kriterium für einen gesicherten Empfang der Signale darstellt.

In der äußeren Regelschleife werden die empfangenen Signale in einer der Detektoreinrichtung nachgeschalteten Dekodiereinrichtung, z.B. einem Viterbi-Decoder, dekodiert. Nachfolgend wird ein jeweiliger charakteristischer Qualitätswert BER ermittelt. In der vorliegenden Schaltung erfolgt dabei eine Mittelung über den charakteristischen Wert BER. Dieser charakteristische Wert BER wird in der äußeren Regelschleife Outer Loop anschließend mit einem Zielwert für den charakteristischen Qualitätswert Target BER verglichen und es wird eine Differenz dBER der beiden Werte berechnet. Die Differenz dBER wird anschließend z. B. durch einen Wichtungsfaktor und andere, evtl. nicht-lineare Operationen in einen Korrekturwert dSIR für das Signal-Interferenz-Verhältnis umgerechnet. Daraufhin erfolgt eine Addition mit einem Zielwert für das Signal-Interferenz-Verhältnis SIR(j) eines vorangehenden Regelintervalls j. Der hierdurch entstehende aktuelle Zielwert für das Signal-Interferenz-Verhältnis SIR(j+1) bzw. Target SIR wird in gleicher Weise mittels einer Verzögerungseinrichtung DELAY um hier einen j-Schritt verzögert und anschließend für die Berechnung des nachfolgenden Zielwertes berücksichtigt. Der aktuelle Sollwert Target SIR dient der schnellen Sendeleistungsregelung in der inneren Regelschleife Inner Loop als Basis für eine Erhöhung oder Erniedrigung der Sendeleistung durch eine Signalisierung von TPC-Bit.

Zur Verbesserung der Sendeleistungsregelung bei unterbrochener Datenübertragung werden nachfolgend ein Verfahren und eine erweiterte Schaltung beschrieben, bei denen ein anderer Kanal mit bekannten Eigenschaften für Messungen verwendet wird und außerdem weiterhin Leistungsregelungs-Kommandos gesendet werden.

Unterbrochene Datenübertragungen gibt es z. B. bei UTRA-TDD, wenn bei einer Abwärtsübertragung, d.h. im sogenannten Downlink, diskontinuierliche Datenübertragung (DTX) eingesetzt wird. Während der Unterbrechungen kann die Teilnehmerstation UE auf dem Datenkanal keine Messungen mehr durchführen. Allerdings gibt es in der Abwärtsverbindung immer einen gemeinsamen Steuerkanal, z.B. den Nachrichten- bzw. Broadcast-Kanal BCH, der von jeder Teilnehmerstation UE empfangen werden kann und weder gerichtet noch leistungsgeregelt ist.

Die Teilnehmerstation UE mißt regelmäßig die Empfangsleistung ELBC und die Qualität QBC des Broadcast-Kanals BCH sowie zusätzlich die Störleistung der Daten. In der Regel kann davon ausgegangen werden, daß insbesondere diese Empfangsleistung ELBC auf dem Broadcast-Kanal BCH relativ zu der Empfangsqualität von Daten schwankt, die auf einem Datenkanal empfangen werden. Daher können bekannte Algorithmen für die Regelung der inneren Schleife zur Leistungsregelung bei Übertragungspausen weiterhin verwendet werden, da die Versorgung mit Meßwerten aus einer anderen Messung aufrechterhalten werden kann.

In ihrer inneren Schleife verwendet die Teilnehmerstation UE während Pausen der Datenübertragung in Abwärtsrichtung den i-ten virtuellen Signal-Interferenz-Verhältnis-Wert

$$SIR_{virt}(i) = RSCP_{virt}(i) - ISCP(i).$$

Der Index i läuft für die Datenübertragungsrahmen während einer Unterbrechung bzw. Übertragungspause von 1 an.

$RSCP_{virt}(i)$ steht für die virtuelle empfangene Signalleistung und ISCP(i) für die Interferenzsignalleistung im zugeordneten Datenkanal. Dabei gilt außerdem

$$RSCP_{virt}(i) = RSCP\,(0) + L\,(0) - L(i) + \Sigma TPC\,(k)\,.$$

L(0) steht für den letzten "pathloss"-Wert vor der Übertragungspause und L(i) steht für den aktuellen pathloss (pathloss = Pfaddämpfung). Der pathloss ergibt sich aus der Differenz der bekannten Sendeleistung des Broadcast-Kanals BCH und dessen gemessener Empfangsleistung. Alle Parameter in obigen Formeln sind logarithmisch, d. h. in dB oder dBm zu verstehen. Der Wert $RSCP_{virt}(i)$ berücksicht also den zuletzt tatsächlich gemessenen RSCP-Wert vor der Unterbrechung, den pathloss L(i) in dB, der auf dem Broadcast-Kanal BCH gemessen wurde, den vor der Unterbrechung zuletzt bestimmten pathloss L(0) und die Summe von Leistungsregelungs-Kommandos TPC(k) in dB über i-1 Rahmen während der Unterbrechung. Im Fall eines TPC-Bit mit nur zwei logischen Zuständen 0 bzw. 1 kann z.B. TPC-Bit "1" für eine Erhöhung und TPC-Bit "0" für eine Erniedrigung um einen Schritt der Höhe x dB stehen, d. h. TPC = +x bzw. -x.

Die TPC-Kommandos werden während Unterbrechungen mittels dieser virtuellen Signal-Interferenz-Verhältnis-Messungen, die auf der Messung z.B. der Empfangsleistung des Broadcast-Kanals BCH beruhen, so berechnet, wie ansonsten mittels der realen Signal-Interferenz-Verhältnis-Messungen im Fall eines aktiven Datenkanals.

In der in Fig. 3 skizzierten beispielhaften Schaltung werden in der Detektoreinrichtung im Fall einer Unterbrechung des Datensignals entsprechend anstelle von Signalen des Datenkanals Signale des Broadcast-Kanals BCH untersucht.

Bei der Berechnung der power control Kommandos in der UE kann auch berücksichtigt werden, daß zwischen dem Zeitschlitz des Broadcastkanals BCH und dem Zeitschlitz des Datenkanals mehrere Zeitschlitze Verzögerung sind. Diese Verzögerung kann bewirken, daß eine auf dem Broadcast-Kanal-Zeitschlitz basierte Schätzung für den Daten-Zeitschlitz unsicher ist. Abhängig von der Verzögerung kann deshalb noch eine längerfristige zeitliche Mittelung der Meßwerte auf dem Broadcast-Kanal BCH durchgeführt werden. D.h. bei langer Verzögerung wird der aktuelle Meßwert gegenüber diesem Mittelwert schwach gewichtet, bei kurzer Verzögerung wird der aktuelle Meßwert stark gewichtet. Da up- und downlink bei einem TDD-System reziprok sind, kann die Art der Gewichtung auch aus der Gewichtung übernommen werden, wie sie z. B. für die offenen Leistungsregelung in Aufwärtsrichtung angewendet wird.

Ein beispielhafter Verlauf der Empfangsleistung des Broadcast-Kanals BCH läßt sich in folgender Weise beschreiben. Falls keine Daten mehr empfangen werden, werden die innere und die äußere Leistungsregelschleife mit Messungen auf dem Broadcast-Kanal BCH aufrechterhalten. Diese Messungen werden relativ zur Qualität Qo (z. B. Bitfehlerrate), Empfangsleistung ELBC des Broadcast-Kanals BCH und Störleistung Io unmittelbar vor der Unterbrechung-der Datenübertragung interpretiert. Weicht das Signal-Interferenz-Verhältnis SIR des letzten empfangenen Signalabschnitts der Daten vom Signal-Interferenz-Verhältnis-Sollwert SIR-target ab, so wird dies mit einer entsprechenden Korrektur berücksichtigt, wobei vorzugsweise das letzte "richtige" Leistungsregelungs-Kommando beim nachfolgend beschriebenen Verfahren bzw. Algorithmus mit berücksichtigt wird. Die innere Schleife mißt nun die Abweichung der Empfangsleistung des Broadcast-Kanals BCH von der letzten gemessenen Leistung Po. Daraus und mit der weiterhin gemessenen Störleistung, die bei vorhandenen Daten auf dies wirken würde, wird ein virtueller Signal-Interferenz-Verhältnis-Wert SIRvirt errechnet und mit dem zuletzt errechneten Signal-Interferenz-Verhältnis-Sollwert SIR-Target der Daten verglichen. Jede Änderung der Abweichung führt in Abhängigkeit von der Leistungsregelungs-Schrittweite zu Leistungsregelungs-Kommandos "TPC-Commands", die zum Sender bzw. zur Basisstation NB übertragen werden.

In der in Fig. 3 skizzierten beispielhaften Schaltung werden in der Detektoreinrichtung im Fall einer Unterbrechung des Datensignals entsprechend anstelle von Signalen des Datenkanals Signale des Broadcast-Kanals BCCHBCH untersucht.

Nachfolgend wird ein Beispiel für eine Regelung mit einer Schrittweite von 1 dB angenommen. Die Empfangsleistung steigt zunächst stetig um 10 dB mit einer Rate von 1 dB/Rahmen an, dann mit 2 dB/Rahmen um 20 dB, um dann auf Po = +30 dB konstant zu bleiben. Die Störleistung über die ersten 15 Rahmen ist konstant und steigt dann um 2 dB pro Rahmen auf Io = -10 dB. Von der Mobilstation UE werden hintereinander 20 Kommandos zur Erniedrigung der Sendeleistung um 1 dB gesendet, gefolgt von Kommandos, die Sendeleistung konstant zu lassen.

Falls das Kommando für eine konstante Sendeleistung im Kommunikationssystem oder in einer der beteiligten Stationen nicht implementiert sein sollte, kann abwechselnd eine höhere und niedrigere Sendeleistung signalisiert werden. Die Summe S bzw. $\Delta 0$ der gesendeten Leistungsregelungs-Kommandos folgt also der Abweichung von $SIR_{virt}$ relativ zu $SIR_{target}$.

Bei einer bevorzugten Ausführungsform werden im Sender die zwischenzeitlich empfangenen TPC-Kommandos aufsummiert und die Summe gespeichert. Nach einer Übertragungspause wird der erste Signalabschnitt der Daten mit der Leistung S*Schrittweite + 'letzte Sendeleistung vor der Sendepause gesendet.

Unter Umständen kann noch eine Korrektur der Sendeleistung durchgeführt werden, falls sich die Ratenanpassung seit der letzten Übertragung geändert hat. Des weiteren wird die Sendeleistung noch mit einem von außen einstellbaren Korrekturterm beaufschlagt.

Vorteilhafterweise wird in dem Korrekturterm auch Bei einer bevorzugten Ausführungsform werden im Sender die zwischenzeitlich empfangenen TPC-Kommandos aufsummiert und die Summe gespeichert. Nach einer Übertragungspause wird der erste Signalabschnitt der Daten mit der Leistung S*Schrittweite + 'letzte Sendeleistung vor der Sendepause gesendet. Unter Umständen kann noch eine Korrektur der Sendeleistung durchgeführt werden, falls sich die Ratenanpassung seit der letzten Übertragung geändert hat. Des weiteren wird die Sendeleistung noch mit einem von außen einstellbaren Korrekturterm beaufschlagt.

Vorteilhafterweise wird in dem Korrekturterm auch eine Änderung der Ratenanpassung und/oder der Kanalkodierung berücksichtigt. Werden z. B. weniger Daten in einem Rahmen übertragen, so können diese besser geschützt werden und es ergibt sich bei gleichem SIR eine höhere Qualität nach der Dekodierung.

Bei der Übertragung der TPC-Kommandos von der Mobilstation UE zur Basisstation NB können Fehler auftreten, so daß die Basisstation NB die Kommandos nicht lesen oder dekodieren kann. In diesem Fall ergeben sich Unsicherheiten in der Summenberechnung $\Sigma TPC(k)$. Jedoch kann man davon ausgehen, daß statistisch sowohl "höher" als auch "niedriger" -Kommandos verloren gehen und sich der Effekt aufhebt. Außerdem kann der Empfänger abhängig von der Zahl der nicht dekodierbaren Kommandos einen Sicherheitszuschlag oder Sicherheitsabschlag bei der Sendeleistung berücksichtigen.

Falls die Übertragung in der Aufwärtsrichtung unterbrochen wird, ergibt sich die Situation, daß die Mobilstation UE zwar alle Messungen durchführen kann, sie die erzeugten Leistungsregelungs-Kommandos aber nicht zum Netz (nodeB) übertragen kann. In diesem Fall sieht eine Ausführungsform vor, daß die Mobilstation UE alle generierten Leistungsregelungs-Kommandos TPC aufsummiert. Die aufgelaufene Summe kann entweder periodisch oder aufgrund eines bestimmten Anlasses, z. B. einer Überschreitung einer Schwelle, über z.B. Kanäle einer höheren Schicht zur Basisstation NB übertragen werden. Alternativ oder zusätzlich kann vorgesehen werden, die Summe nach Wiederaufnahme der Datenübertragung zur Basisstation NB zu übermitteln. Alternativ kann statt der Summe auch die zum Absendezeitpunkt gültige Abweichung zwischen $SIR_{target}$ und SIR bzw. SIRvirt übertragen werden.

Zusätzlich zu der oben beschriebenen inneren Regelschleife kann auch die äußere Regelschleife weiterlaufen. Die äußere Regelschleife erfaßt Abweichungen, die mit dem Signal-Interferenz-Verhältnis SIR nicht ausgeregelt werden können. So kann bei gleichem Signal-Interferenz-Verhältnis SIR die Qualität eines Signal unterschiedlich sein, wenn sich der Übertragungskanal oder z. B. die Geschwindigkeit der Mobilstation UE ändern. In solchen Fällen muß die äußere Regelschleife "outer loop" den Sollwert $SIR_{target}$ der inneren Regelschleife nachführen. Um diesen Mechanismus auch bei Messungen auf dem Broadcast-Kanal BCH zu gewährleisten, muß bei der Qualität des BCH die Abweichung des aktuellen Signal-Interferenz-Verhältnis des Broadcast-Kanals (SIRbc(i))von dessen Anfangswert (SIRbc(0)) berücksichtigt werden.

Die äußere Regelschleife nimmt den anfänglichen Qualitätswert des Broadcast-Kanals BCH bei Beginn der Übertragungspause als Sollgröße und vergleicht damit den aktuellen Qualitätswert des Broadcast-Kanals BCH, um daraus einen Sollwert SIR-target des Signal-Interferenz-Verhältnisses SIR für die innere Regelschleife abzuleiten. Dabei sollte auch berücksichtigt werden, daß sich das Signal-Interferenz-Verhältnis SIR des Broadcast-Kanals BCH verändert haben kann und sich dann auch dessen Qualität geändert hat. Dieser Effekt in der Qualität des Signals des Broadcast-Kanals BCH sollte entsprechend kompensiert werden. Weicht das Signal-Interferenz-Verhältnisses SIR des Broadcast-Kanals BCH vom Anfangswert um z. B. 3 dB nach oben ab, so wird die Qualität Q vor dem Vergleich mit dem anfänglichen Qualitätswert Qo mit dem Wert dQ korrigiert, der sich aus einem um 3 dB zu hohen Signal-Interferenz-Verhältnis SIR ergibt. Durch diese Kompensation wird der Einfluß des Signal-Interferenz-Verhältnis SIR vom Einfluß des Kanals entkoppelt. D. h. falls nach der Korrektur um dQ noch eine Abweichung zwischen dem anfänglichen Qualitätswert Qo und dem korrigierten Broadcast-Kanal-Qualitätswert QBC+dQ bleibt, so ist diese Abweichung rein auf Änderungen des Übertragungskanals zurückzuführen.

Die Zuordnung eines Korrekturwertes dQ zu einer Abweichung des Signal-Interferenz-Verhältnisses SIR kann aus einer Tabelle bzw. Matrix gelesen werden. Die Einträge in der Matrix können von Erfahrungswerten aus der Vergangenheit selbsttätig abgeleitet oder fest vorgegeben sein.

**Patentansprüche**

1. Verfahren zur Sendeleistungsregelung in einem Funk-Kommunikationssystem mit zumindest einer Mobilstation (UE) und einer Basisstation (NB), die zumindest zeitweilig miteinander kommunizieren, bei dem
   die Mobilstation (UE) während einer aktiven Datenkommunikation in einem Datenkanal Empfangsleistungen von von der Basisstation (NB) in dem Datenkanal gesendeten Signalen bestimmt, aus den bestimmten Empfangsleistungen Sendeleistungsregelungs-Anweisungen ableitet, und die Sendeleistungsregelungs-Anweisungen der Basisstation (NB) übermittelt,
   **dadurch gekennzeichnet, daß**
   die Mobilstation (UE) während einer Unterbrechung der aktiven Datenkommunikation zum Ableiten von Sendeleistungsregelungs-Anweisungen Empfangsleistungen von Signalen in einem von dem Datenkanal unabhängigen allgemeinen Signalisierungkanal (BCH) der Basisstation (NB) bestimmt, aus den bestimmten Empfangsleistungen Sendeleistungsregelungs-Anweisungen ableitet, und die Sendeleistungsregelungs-Anweisungen der Basisstation (NB) übermittelt.

2. Verfahren nach Anspruch 1, bei dem
   die Mobilstation (UE) die Sendeleistungsregelungs-Anweisung in einer Aufwärtsrichtung (UL) zu der Basisstation (NB) übermittelt.

3. Verfahren nach einem vorstehenden Anspruch, bei dem
   als Sendeleistungsregelungs-Anweisung Werte einer Vielzahl einzelner Sendeleistungsregelungs-Anweisungen in der Mobilstation (UE) und/oder Basisstation (NB) zu Summen aufaddiert werden.

4. Verfahren nach Anspruch 3, bei dem
   eine aufaddierte Summe als Sendeleistungsregelungs-Anweisung für die Steuerung der Sendeleistung der Basisstation (NB) verwendet wird.

5. Verfahren nach Anspruch 3 oder 4, bei dem
   die aufaddierte Summe in regelmäßigen oder unregelmäßigen Abständen, oder vor der Wiederaufnahme der Datenkommunikation zu der Basisstation (NB) übertragen wird.

6. Verfahren nach einem vorstehenden Anspruch, bei dem
   die Sendleistungsregelungs-Anweisung mittels eines Korrekturwertes korrigiert wird.

7. Verfahren nach Anspruch 6, bei dem
   der Korrekturwert einen Sicherheitszuschlag oder Sicherheitsabschlag basierend auf einer insbesondere geschätzten Detektionssicherheit der empfangenen Sendeleistungsregelungs-Anweisungen darstellt.

8. Verfahren nach Anspruch 6 oder 7, bei dem
   der Korrekturwert eine geänderte Ratenanpassung und/oder Kanalkodierung berücksichtigt.

9. Verfahren nach einem vorstehenden Anspruch, bei dem
   bei der Ableitung der Sendeleistungsregelungs-Anweisungen eine Gewichtung zwischen einer aktuellen und längerfristigen Pfaddämpfung berücksichtigt wird.

**10.** Verfahren nach einem vorstehenden Anspruch, bei dem

die Sendeleistungsregelungs-Anweisungen in einer inneren Regelungsschleife der Basisstation (NB) verarbeitet werden.

**11.** Funk-Kommunikationssystem mit zumindest einer Mobilstation (UE) und einer Basisstation (NB), die zumindest zeitweilig miteinander kommunizieren, zum Durchführen des Verfahrens nach Anspruch 1.

**Claims**

**1.** Method for transmission power control in a radio communications system having at least one mobile station (UE) and one base station (NB), which communicate with one another at least at times, in which the mobile station (UE) determines reception power levels of signals which are transmitted from the base station (NB) in a data channel during active data communication in that data channel, transmission power control instructions are derived from the determined reception power levels, and the transmission power control instructions are transmitted to the base station (NB),
**characterized in that**
the mobile station (UE) determines reception power levels of signals in a general signalling channel (BCH), which is independent of the data channel, from the base station (NB) during an interruption in the active data communication in order to derive transmission power control instructions, derives transmission power control instructions from the determined reception power levels, and transmits the transmission power control instructions to the base station (NB).

**2.** Method according to Claim 1, in which the mobile station (UE) transmits the transmission power control instruction in an uplink connection (UL) to the base station (NB).

**3.** Method according to one of the preceding claims, in which
values of a large number of individual transmission power control instructions are added up in the mobile station (UE) and/or base station (NB) to form sums as a transmission power control instruction.

**4.** Method according to Claim 3, in which an accumulated sum is used as the transmission power control instruction for controlling the transmission power of the base station (NB).

**5.** Method according to Claim 3 or 4, in which the accumulated sum is transmitted at regular or irregular intervals or before the resumption of the data communication to the base station (NB).

**6.** Method according to one of the preceding claims, in which
the transmission power control instruction is corrected by means of a correction value.

**7.** Method according to Claim 6, in which the correction value represents a safety supplement or safety deduction based on the, in particular estimated, detection certainty of the received transmission power control instructions.

**8.** Method according to Claim 6 or 7, in which the correction value takes account of changed rate matching and/or channel coding.

**9.** Method according to one of the preceding claims, in which
a weighting between a current path loss and long-term path loss is taken into account in the derivation of the transmission power control instructions.

**10.** Method according to one of the preceding claims, in which
the transmission power control instructions are processed in an inner control loop in the base station (NB).

**11.** Radio communications system having at least one mobile station (UE) and one base station (NB), which communicate at least temporarily with one another, for carrying out the method according to Claim 1.

**Revendications**

**1.** Procédé pour le réglage de la puissance d'émission dans un système de radiocommunication, comprenant au moins une station mobile (UE) et une station de base (NB) qui communiquent entre elles au moins par moments, dans lequel
pendant une communication de données active dans un canal de données, la station mobile (UE) détermine des puissances de réception de signaux émis par la station de base (NB) dans le canal de données, dérive des instructions de réglage de la puissance d'émission à partir des puissances de réception déterminées et transmet les instructions de réglage de la puissance d'émission à la station de base (NB),
**caractérisé en ce que**
la station mobile (UE) détermine des puissances de réception de signaux dans un canal général de signalisation (BCH) de la station de base (NB), indépendant du canal de données, pendant une interruption de la communication active de données afin de dériver les instructions de réglage de la puissance d'émission, dérive des instructions de réglage de la puissance d'émission à partir des puissance de réception déterminées et transmet les instructions de réglage de la puissance d'émission à la station de base (NB).

2. Procédé selon la revendication 1, dans lequel
la station mobile (UE) transmet l'instruction de réglage de la puissance d'émission à la station de base (NB) dans un sens montant (UL).

3. Procédé selon une quelconque revendication précédente, dans lequel
des valeurs d'une pluralité d'instructions individuelles de réglage de la puissance d'émission sont additionnées en sommes dans la station mobile (UE) et/ou la station de base (NB), comme instruction de réglage de la puissance d'émission.

4. Procédé selon la revendication 3, dans lequel
une somme additionnée est utilisée comme instruction de réglage de la puissance d'émission pour la commande de la puissance d'émission de la station de base (NB).

5. Procédé selon la revendication 3 ou 4, dans lequel
la somme additionnée est transmise à intervalles réguliers ou irréguliers, ou avant la reprise de la communication de données à la station de base (NB).

6. Procédé selon une revendication précédente quelconque, dans lequel
l'instruction de réglage de la puissance d'émission est corrigée au moyen d'une valeur de correction.

7. Procédé selon la revendication 6, dans lequel
la valeur de correction représente un ajout de sécurité ou un retrait de sécurité basé sur une sécurité de détection, notamment estimée, des instructions de réglage de la puissance d'émission reçues.

8. Procédé selon la revendication 6 ou 7, dans lequel
la valeur de correction tient compte d'une adaptation de débit modifiée et/ou d'un codage de canal.

9. Procédé selon une revendication précédente quelconque, dans lequel
une pondération entre un affaiblissement actuel de la voie et un affaiblissement plus long de la voie est prise en considération lors de la dérivation des instructions de réglage de la puissance d'émission.

10. Procédé selon une revendication précédente quelconque, dans lequel
les instructions de réglage de la puissance d'émission sont traitées dans une boucle de réglage intérieure de la station de base (NB).

11. Système de radiocommunication comprenant au moins une station mobile (UE) et une station de base (NB) qui communiquent entre elles au moins par moments, destiné à la réalisation du procédé selon la revendication 1.

FIG. 1 (Stand der Technik)

EP 1 247 352 B1

FIG. 2

# Outer Loop

FIG. 3